# FASCICULE DE BREVET EUROPEEN

(11) **EP 3 325 110 B1**
(45) Date de publication et mention de la délivrance du brevet: **26.06.2019**
(21) Numéro de dépôt: 16750985.0
(22) Date de dépôt: 22.07.2016
(51) Int. Cl.: A63B 39/00, B29C 65/00, B29C 45/48, A63B 102/16, B29L 31/54, B29C 65/48

(54) **BALLE DE TENNIS DE TABLE ET SON PROCÉDÉ DE FABRICATION**
TISCHTENNISBALL SOWIE VERFAHREN ZU DESSEN HERSTELLUNG
TABLE TENNIS BALL AND METHOD FOR THE PRODUCTION THEREOF

(30) Priorité: 22.07.2015 FR 1556963
(43) Date de publication de la demande: 30.05.2018
(73) Titulaire: Decathlon, 59650 Villeneuve d'Ascq (FR)
(72) Inventeur: DOBY, Patrick, 50551 Attiches (FR)
(74) Mandataire: Sayettat, Julien Christian
(86) Numéro de dépôt international: PCT/FR2016/051922
(87) Numéro de publication internationale: WO 2017/013378

(56) Documents cités:
- GB-A- 1 136 416
- JP-A- S5 634 438
- US-A- 2 091 684
- US-A- 4 212 460

## Description

L'invention concerne une balle destinée à la pratique du tennis de table ainsi qu'un procédé de fabrication d'une telle balle.

Une balle de tennis de table comprend un corps creux sphérique qui peut être réalisé à partir de deux coques hémisphériques formées séparément avant d'être assemblées bord à bord.

Pour ce faire, il est connu de réaliser deux feuillures complémentaires au niveau des bords libres des coques, lesdites feuillures étant agencées pour pouvoir maitriser le positionnement relatif desdites coques assemblées afin de garantir l'obtention de la géométrie sphérique de la balle.

Selon une réalisation, la fixation des coques assemblées est réalisée par collage au niveau des feuillures, en évitant notamment un apport de chaleur pouvant engendrer des risques de déformation de la balle en raison de la faible épaisseur des coques.

Les coques sont traditionnellement formées à partir de celluloïd mais l'emploi de ce matériau n'est pas sans risque dans la mesure où il présente des propriétés élevées d'inflammabilité et de toxicité, notamment en raison de l'utilisation de solvants lors de la fabrication.

Ainsi, outre le fait que certains pays interdisent la production de celluloïd, la réglementation mise en place par la Fédération Internationale de Tennis de Table (ITTF) tend à remplacer les balles en celluloïd par des balles dont les coques sont réalisées à partir de matériaux plastiques respectant des conditions environnementales et de sécurité déterminées.

De ce fait, des composés thermoplastiques ont été développés en vue d'octroyer aux balles de tennis de table des caractéristiques de jeu similaires aux balles en celluloïd, en particulier en termes de rebond, de rotation, de friction ou de dureté, notamment afin de répondre aux normes de compétition définies par l'ITTF.

On connaît par exemple du document JP-56 130 329 une balle de tennis de table dont le corps est réalisé à partir de deux coques hémisphériques formées chacune par moulage par injection d'un matériau plastique.

En particulier, ce document prévoit de former deux feuillures au niveau des bords libres des coques qui comprennent chacune une portée radiale et une portée cylindrique. L'assemblage des coques est effectué par mise en regard radial et sans jeu des portées cylindriques ainsi que par mise en appui circonférentiel des portées radiales afin d'obtenir le positionnement des coques qui garantit la géométrie sphérique attendue.

Toutefois, l'assemblage des feuillures étant réalisé sans jeu, la géométrie cylindrique de leur portée est difficilement emboitable pour former le corps sphérique.

Par ailleurs, pour solidariser les coques par collage, il convient de disposer un adhésif sur les portées d'au moins une feuillure avant l'assemblage, ledit adhésif fluant entre lesdites feuillures lors dudit assemblage. Mais l'interférence entre les portées cylindriques lors de l'assemblage peut conduire à une mauvaise répartition de l'adhésif à l'interface des feuillures, pouvant notamment nuire à la fiabilité de la tenue de l'assemblage des coques.

Par conséquent, sauf à augmenter le jeu à l'interface des feuillures au détriment de la bonne sphéricité de la balle, la fixation par collage des coques connues pose des problèmes d'assemblage ainsi que de fiabilité de la tenue dudit assemblage, notamment à l'usage.

JP S56 34438 A dévoile une balle de tennis de table comprenant un corps creux sphérique formé par assemblage de deux coques hémisphériques au niveau de deux feuillures complémentaires réalisées sur les bords libres desdites coques, lesdites feuillures présentant chacune une portée radiale et une portée circonférentielle.

L'invention vise à perfectionner l'art antérieur en proposant une balle de tennis de table présentant deux coques hémisphériques dont les bords libres sont pourvus de feuillures ayant une géométrie adaptée pour faciliter l'assemblage desdites coques tout en garantissant la fiabilité de leur tenue.

A cet effet, selon une premier aspect, l'invention propose une balle de tennis de table comprenant un corps creux sphérique formé par collage de deux coques hémisphériques au niveau de deux feuillures complémentaires réalisées sur les bords libres desdites coques, lesdites feuillures présentant chacune une portée radiale et une portée circonférentielle qui sont disposées en regard circonférentiel pour les portées radiales et en regard radial pour les portées circonférentielles, lesdites portées circonférentielles présentant chacune une portion cylindrique et une portion conique.

Selon un deuxième aspect, l'invention propose un procédé de fabrication d'une telle balle de tennis de table prévoyant :
- la formation de deux coques hémisphériques présentant chacune un bord libre sur lequel une feuillure est réalisée, chacune desdites feuillures présentant une portée radiale et une portée circonférentielle ayant une portion cylindrique et une portion conique ;
- la disposition d'un adhésif sur au moins une feuillure ;
- l'assemblage des coques au niveau de leur feuillure en disposant les portées radiales en regard circonférentiel et les portées circonférentielles en regard radial.

D'autres particularités et avantages de l'invention apparaîtront dans la description qui suit, faite en référence aux figures annexées, dans lesquelles :
- la figure 1 est une représentation schématique d'une balle de tennis de table selon un mode de réalisation de l'invention ;
- la figure 2 est une représentation en coupe longitudinale de la balle de la figure 1 ;
- la figure 2a est un agrandissement de la figure 2, montrant plus particulièrement la zone d'assemblage des coques hémisphériques de la balle.

En relation avec ces figures, on décrit ci-dessous une balle de tennis de table comprenant un corps creux sphérique 1 qui est formé de deux coques hémisphériques 2, 3 de mêmes dimensions, lesdites coques étant assemblées au niveau de leurs bords libres de manière coaxiale en formant une ligne de jonction circulaire 4.

Les bords libres des coques 2, 3 sont pourvus de feuillures complémentaires 5, 6 qui sont réalisées sur tout le pourtour desdits bords et sont agencées pour fiabiliser le positionnement relatif et l'alignement desdites coques lors de leur assemblage, garantissant notamment une bonne sphéricité de la balle avec une ligne de jonction 4 très peu visible.

Selon le mode de réalisation représenté, les feuillures 5, 6 sont orientées vers respectivement l'intérieur et l'extérieur des coques 2, 3, en présentant chacune une portée radiale 7, 8 dont l'extrémité extérieure forme la ligne de jonction 4 et une portée circonférentielle 9, 10 destinée notamment au centrage desdites coques lors de l'assemblage.

Les feuillures 5, 6 sont complémentaires notamment en ce que les portées radiales 7, 8 sont disposées en regard circonférentiel et les portées circonférentielles 9, 10 sont disposées en regard radial. Plus précisément, chaque portée circonférentielle 9, 10 présente une portion cylindrique 11, 12 qui s'étend depuis la portée radiale 7, 8 et est destinée à assurer le centrage des coques 2, 3 lors de l'assemblage.

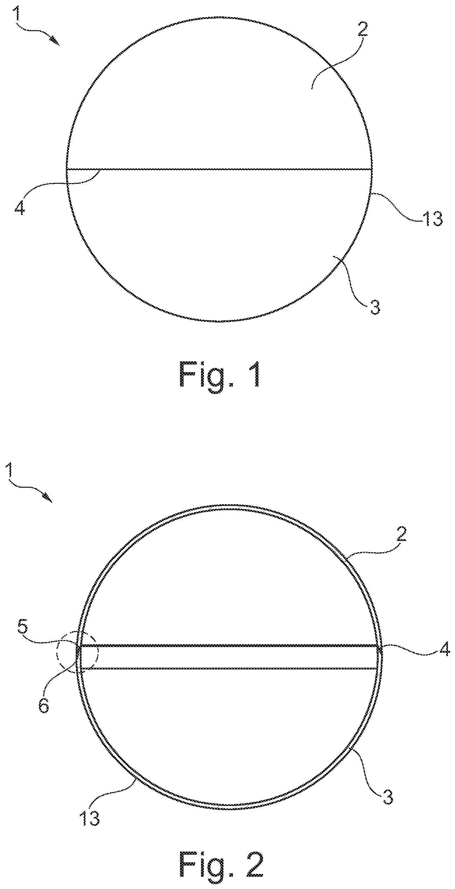

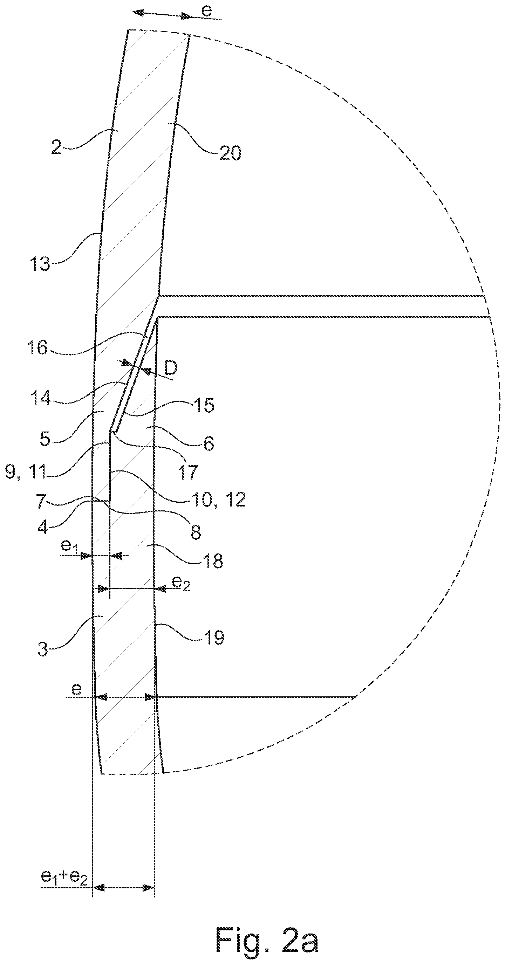

En relation avec la figure 2a, les portées radiales 7, 8 sont en appui circonférentiel l'une sur l'autre tandis que les portions cylindriques 11, 12 s'étendent depuis l'extrémité intérieure desdites portées radiales, notamment selon un angle de 90°, en présentant sensiblement un même diamètre pour être disposées sans jeu en regard radial.

Selon une réalisation avantageuse, les coques 2, 3 sont formées séparément par moulage par injection d'un matériau thermoplastique puis sont disposées face à face pour leur assemblage au moyen d'outils de préhension.

Préférentiellement, le moulage des coques 2, 3 est réalisé sous haute pression, par exemple supérieure à 65 bars/cm², permettant d'obtenir des dimensions et des caractéristiques physiques desdites coques précises ainsi qu'une surface externe 13 modulable selon l'aspect souhaité, par exemple brillant, mat ou rugueux.

En outre, le moulage des coques 2, 3 peut être réalisé par l'intermédiaire d'un système d'injection type busette chaude à obturateur sans déchet notamment pour éviter toute trace sur la balle et pour réduire la perte de matière. Préférentiellement, pour éviter toute étape de retouche des coques 2, 3 avant leur assemblage, les feuillures 5, 6 sont réalisées lors du moulage, en équipant le moule de chaque coque 2, 3 d'empreintes respectivement mâle et femelle.

En particulier, les moules sont agencés de sorte que les coques 2, 3 présentent des dimensions telles qu'après assemblage le corps sphérique 1 ait une épaisseur comprise entre 0,20 mm et 1,3 mm et un diamètre compris entre 38,5 mm et 45 mm selon l'utilisation de la balle souhaitée.

Par exemple, pour répondre aux normes de compétition imposées par la Fédération Internationale de Tennis de Table (ITTF), le corps sphérique 1 peut présenter un diamètre de 40,0 mm et une épaisseur sensiblement égale à 0,5 mm, pour un poids de balle de 2,7 g.

De façon avantageuse, les coques 2, 3 sont formées à base d'un matériau thermoplastique ne présentant pas de celluloïd afin d'éviter les risques de feux et de diminuer l'utilisation de polluants lors de la fabrication de la balle.

Le matériau thermoplastique présente des propriétés agencées pour permettre d'obtenir une balle dont les caractéristiques de jeu sont similaires à celles des balles en celluloïd, notamment afin de répondre aux critères des catégories « trois étoiles » définies par l'ITTF et de pouvoir être utilisée à l'entraînement et/ou en compétition.

En particulier, le matériau thermoplastique présente des propriétés mécaniques qui permettent à la balle de tennis de table de présenter, dans des conditions de jeu réelles, une impulsion à la frappe, un son à l'impact, un rebond et une résistance aux chocs optimaux. A cet effet, on prévoit l'utilisation d'un matériau thermoplastique qui présente notamment une densité inférieure à 1,22, afin de permettre une épaisseur du corps sphérique 1 agencée pour permettre le poids de balle exigé.

En outre, le matériau présente un module d'élasticité et une contrainte de traction selon la norme ISO 527 compris respectivement entre 2 300 et 3 000 MPa, et entre 25 et 80 MPa, ainsi qu'une résistance aux chocs Charpy selon la norme ISO 179 comprise entre 20 et 90 kJ/m².

Avantageusement, le matériau thermoplastique comprend au moins un élastomère, tel de l'acrylonitrile butadiène styrène (ABS) et/ou de l'acrylonitrile styrène acrylate (ASA), ou similaire, permettant d'obtenir un rapport optimal entre résistance au choc et déformation de la balle afin d'avoir un coefficient satisfaisant de restitution d'énergie.

Pour améliorer la résistance au choc tout en préservant le module d'élasticité du matériau, celui-ci peut également comprendre du polycarbonate (PC). De manière préférentielle, le matériau thermoplastique est obtenu par un mélange homogène d'ABS et/ou d'ASA avec une quantité de polycarbonate comprise entre 40 % et 50 % en poids.

En outre, le composé ABS/PC ou ASA/PC est particulièrement adapté au moulage par injection sous haute pression pour la formation des coques 2, 3, facilitant sa mise en oeuvre tout en réduisant l'usage de produits polluants et les risques d'explosion ou d'incendie.

En outre, selon les caractéristiques souhaitées, le matériau thermoplastique peut être non réticulé et non chargé et/ou sans renfort. En variante, le matériau peut être chargé en fibres de verre et/ou réticulé par incorporation d'un adjuvant de réticulation, ou une modification de la structure chimique dudit matériau.

Après moulage, on prévoit de solidariser les coques 2, 3 par collage au niveau des feuillures 5, 6, ledit collage permettant notamment d'éviter l'apport de chaleur qui peut engendrer des risques de déformation de la balle en raison de la faible épaisseur desdites coques.

En particulier, un adhésif est interposé à l'interface des portées 7-10 des feuillures 5, 6 de manière homogène afin d'assurer l'étanchéité de l'assemblage sur toute ladite interface. Pour ce faire, on prévoit de disposer l'adhésif sur le tour des portées 7-10 d'au moins une feuillure 5, 6 par exemple au moyen d'une buse d'injection automatique positionnée sur ladite feuillure.

Pour favoriser une répartition de l'adhésif optimale entre les feuillures 5, 6, au moins une coque 2, 3 peut être déplacée en rotation lors de la disposition de l'adhésif et/ou de l'assemblage.

Pour faciliter leur assemblage, les portées circonférentielles 9, 10 présentent chacune une deuxième portion 14, 15 qui est conique. En particulier, lors de l'emboitement des feuillures 5, 6, la portion conique 15 de la feuillure intérieure 6 et la portion cylindrique 11 de la feuillure extérieure 5 assurent un centrage des coques 2, 3 lors de l'assemblage.

Par ailleurs, pour augmenter la fiabilité de la tenue de l'assemblage, les portions coniques 14, 15 forment entre elles un jeu 16 agencé pour contenir l'adhésif, permettant ainsi d'augmenter la quantité d'adhésif entre les feuillures 5, 6 sans impacter la géométrie sphérique du corps 1 de la balle.

En particulier, lors de l'assemblage, l'adhésif flue à l'intérieur du jeu 16 formé entre les portions coniques 14, 15, tout en permettant le centrage et l'alignement des coques 2, 3 au niveau des portées radiales 7, 8 et des portions cylindriques 11, 12.

A cet effet, le jeu 16 présente une dimension D qui est supérieure à la différence de diamètre des portions cylindriques 11, 12. En particulier, la dimension D du jeu 16 est suffisante pour permettre à une partie de l'adhésif de fluer et d'être disposée dans ledit jeu lors de la mise en appui circonférentiel et radial respectivement des portées radiales 7, 8 et des portions cylindriques 11, 12.

Selon le mode de réalisation représenté, chaque feuillure 5, 6 présente successivement de l'extérieur vers l'intérieur la portée radiale 7, 8, la portion cylindrique 11, 12 puis la portion conique 14, 15.

En relation avec la figure 2a, la feuillure extérieure 5 de la coque 2 présente une portée radiale 7, une portion cylindrique 11 et une portion conique 14 qui s'étendent continument le long de ladite feuillure, ladite portion conique s'étendant directement depuis l'extrémité supérieure de ladite portion cylindrique.

La feuillure intérieure 6 de la coque 3 présente une portée circonférentielle 10 dont les portions conique 15 et cylindrique 12 sont reliées par un épaulement radial 17 qui est agencé pour définir la dimension D du jeu 16 entre les portions coniques 14, 15. Ainsi, les portions coniques 14, 15 présentent un même angle de conicité qui est agencé pour redonner de l'épaisseur à chaque feuillure 5, 6, permettant notamment la conservation de la résistance mécanique de la balle.

Selon une réalisation avantageuse, les portions cylindriques 11, 12 présentent chacune une épaisseur e₁, e₂ dont la somme est supérieure à l'épaisseur nominale e des coques 2, 3. Ainsi, on limite les risques de rupture mécanique au niveau de la ligne de jonction 4, l'épaisseur e₂ de la portion cylindrique 12 étant réduite par rapport à l'épaisseur nominale e d'une valeur qui est inférieure à celle de l'épaisseur e₁ de la portion cylindrique 11.

En particulier, la somme de l'épaisseur e₁ et de l'épaisseur e₂ peut être supérieure à 110 % de l'épaisseur e, notamment en étant comprise entre 110 % et 130 % de l'épaisseur e. Par ailleurs, toujours pour améliorer la résistance mécanique, l'épaisseur e₂ peut être supérieure à l'épaisseur e₁, notamment en étant comprise entre 150 % et 250 % de l'épaisseur e₁.

En relation avec la figure 2a, le bord libre de la feuillure intérieure 6 présente une portion de base 18 depuis laquelle la portée circonférentielle 10 s'étend, ladite portion de base présentant une épaisseur qui est décroissante depuis la somme des épaisseurs e₁, e₂ de chacune des portions cylindriques 11, 12 jusqu'à l'épaisseur nominale e des coques 2, 3.

En particulier, la portion de base 18 présente un méplat intérieur 19, l'épaisseur décroissante étant délimitée entre ledit méplat et la surface externe sphérique 13 de la coque 3, l'angle de conicité de la portion conique 15 permettant d'obtenir l'épaisseur e₂ nécessaire pour conférer la résistance mécanique attendue, notamment en fonction du matériau formant les coques 2, 3.

S'agissant du bord libre de la feuillure extérieure 5, il présente une portion de base 20 depuis laquelle la portée circonférentielle 9 s'étend, ladite portion de base présentant une épaisseur qui est constamment égale à l'épaisseur nominale e, ladite portion de base étant délimitée par les deux génératrices sphériques de la coque 2.

Préférentiellement relativement à la quantité d'adhésif contenue dans le jeu 16, la portion conique 14, 15 présente une longueur qui est supérieure à celle de la portion cylindrique 11, 12, notamment en étant comprise entre 150 % et 300 % de la longueur de ladite portion cylindrique.

Plus particulièrement, les portions coniques 14, 15 présentent une longueur comprise entre 0,8 mm et 1,2 mm avec un jeu 16 formé entre lesdites portions coniques présentant une dimension D comprise entre 0,03 mm et 0,07 mm. En outre, la longueur de chaque portée radiale 7, 8 peut être comprise entre 15 % et 45 % de l'épaisseur nominale e de la coque 2, 3.

Dans le cas d'une épaisseur nominale des coques 2, 3 sensiblement égale à 0,5 mm, on peut prévoir par exemple une portée radiale 7, 8 et une portion cylindrique 11, 12 dont la longueur est respectivement de 0,16 mm et de 0,5 mm, avec un jeu 16 entre les portions coniques 14, 15 présentant une dimension D de 0,05 mm, lesdites portions coniques s'étendant sur une hauteur de 1 mm.

Après assemblage des coques 2, 3, on peut prévoir une étape de retrait d'un éventuel excédent d'adhésif disposé sur la surface externe 13 du corps sphérique 1, notamment au niveau de la ligne de jonction 4 desdites coques. La surface externe 13 peut ainsi être polie par exemple par une reprise au tonneau ou au moyen d'un bol vibrant.

Enfin, une étape de contrôle des caractéristiques de la balle, notamment au niveau de sa sphéricité, de son rebond, de son poids et/ou de sa compression, peut être prévue en fin de fabrication.

## Revendications

1. Balle de tennis de table comprenant un corps creux sphérique (1) formé par collage de deux coques hémisphériques (2, 3) au niveau de deux feuillures complémentaires (5, 6) réalisées sur les bords libres desdites coques, lesdites feuillures présentant chacune une portée radiale (7, 8) et une portée circonférentielle (9, 10) qui sont disposées en regard circonférentiel pour les portées radiales (7, 8) et en regard radial pour les portées circonférentielles (9, 10), ladite balle de tennis de table étant **caractérisée en ce que** les portées circonférentielles (9, 10) présentent chacune une portion cylindrique (11, 12) et une portion conique (14, 15).

2. Balle de tennis de table selon la revendication 1, **caractérisée en ce que** les portions cylindriques (11, 12) présentent chacune une épaisseur (e₁, e₂) dont la somme est supérieure à l'épaisseur nominale (e) des coques (2, 3).

3. Balle de tennis de table selon la revendication 2, **caractérisée en ce que** le bord libre de la feuillure intérieure (6) présente une portion de base (18) depuis laquelle la portée circonférentielle (10) s'étend, ladite portion de base présentant une épaisseur qui est décroissante depuis la somme des épaisseurs (e₁, e₂) de chacune des portions cylindriques (11, 12) jusqu'à l'épaisseur nominale (e) des coques (2, 3).

4. Balle de tennis de table selon la revendication 3, **caractérisée en ce que** la portion de base (18) présente un méplat intérieur (19).

5. Balle de tennis de table selon l'une quelconque des revendications 1 à 4, **caractérisée en ce que** les portions coniques (14, 15) forment entre elles un jeu (16) dont la dimension D est supérieure à la différence de diamètre des portions cylindriques (11, 12).

6. Balle de tennis de table selon l'une quelconque des revendications 1 à 5, **caractérisée en ce qu'**un adhésif est disposé à l'interface des portées (7-10) des feuillures (5, 6).

7. Balle de tennis de table selon l'une quelconque des revendications 1 à 6, **caractérisée en ce que** chaque feuillure (5, 6) présente successivement de l'extérieur vers l'intérieur, la portée radiale (7, 8), la portion cylindrique (11, 12) puis la portion conique (14, 15).

8. Balle de tennis de table selon l'une quelconque des revendications 1 à 7, **caractérisée en ce que** la portée radiale (7, 8), la portion cylindrique (11, 12) et la portion conique (14, 15) d'au moins une feuillure (5, 6) s'étendent continument.

9. Balle de tennis de table selon l'une quelconque des revendications 5 à 8, **caractérisée en ce qu'**au moins une portée circonférentielle (9, 10) présente un épaulement radial (17) reliant la portion conique (14, 15) à la portion cylindrique (11, 12), ledit épaulement étant agencé pour définir la dimension D du jeu (16) entre les portions coniques (14, 15).

10. Balle de tennis de table selon l'une quelconque des revendications 1 à 9, **caractérisée en ce que** les portions coniques (14, 15) présentent un même angle de conicité.

11. Balle de tennis de table selon l'une quelconque des revendications 1 à 10, **caractérisée en ce que** la portion conique (14, 15) présente une longueur qui est supérieure à celle de la portion cylindrique (11, 12), notamment en étant comprise entre 150 % et 300 % de la longueur de ladite portion cylindrique.

12. Balle de tennis de table selon l'une quelconque des revendications 1 à 11, **caractérisée en ce que** la longueur de la portée radiale (7, 8) est comprise entre 15 % et 45 % de l'épaisseur nominale (e) de la coque (2, 3).

13. Balle de tennis de table selon l'une quelconque des revendications 1 à 12, **caractérisée en ce que** les portions cylindriques (11, 12) présentent sensiblement un même diamètre pour être disposées sans jeu en regard radial.

14. Balle de tennis de table selon l'une quelconque des revendications 1 à 13, **caractérisée en ce que** les portées radiales (7, 8) sont en appui circonférentiel l'une sur l'autre.

15. Balle de tennis de table selon l'une quelconque des revendications 1 à 14, **caractérisée en ce que** les coques (2, 3) sont réalisées à base d'un matériau thermoplastique ne comprenant pas de celluloïd.

16. Balle de tennis de table selon la revendication 15, **caractérisée en ce que** le matériau thermoplastique comprend au moins un élastomère, notamment en étant choisi parmi l'ABS et l'ASA.

17. Balle de tennis de table selon l'une des revendications 15 ou 16, **caractérisée en ce que** le matériau thermoplastique comprend du polycarbonate.

18. Balle de tennis de table selon les revendications 16 et 17, **caractérisée en ce que** le matériau thermoplastique comprend un mélange d'ABS et/ou d'ASA avec une quantité de polycarbonate comprise entre 40 % et 50 % en poids.

19. Procédé de fabrication d'une balle de tennis de table selon l'une quelconque des revendications 1 à 18, **caractérisé en ce qu'**il prévoit :
- la formation de deux coques hémisphériques (2, 3) présentant chacune un bord libre sur lequel une feuillure (5, 6) est réalisée, chacune desdites feuillures présentant une portée radiale (7, 8) et une portée circonférentielle (9, 10) ayant une portion cylindrique (11, 12) et une portion conique (14, 15) ;
- la disposition d'un adhésif sur au moins une feuillure (5, 6) ;
- l'assemblage des coques (2, 3) au niveau de leur feuillure (5, 6) en disposant les portées radiales (7, 8) en regard circonférentiel et les portées circonférentielles (9, 10) en regard radial.

20. Procédé de fabrication selon la revendication 19, **caractérisé en ce que** les coques (2, 3) sont formées par moulage par injection d'un matériau thermoplastique.

21. Procédé de fabrication selon l'une des revendications 19 ou 20, **caractérisé en ce que** l'adhésif est disposé sur le tour des portées (7-10) d'au moins une des feuillures (5, 6), au moins une coque (2, 3) étant déplacée en rotation lors de la disposition de l'adhésif et/ou lors de l'assemblage desdites coques afin de favoriser la répartition de l'adhésif entre lesdites feuillures.

22. Procédé de fabrication selon l'une quelconque des revendications 19 à 21, **caractérisé en ce qu'**il prévoit en outre une étape de retrait d'un éventuel excédent d'adhésif disposé sur la surface externe (13) du corps sphérique (1).

## Patentansprüche

1. Tischtennisball, einen kugelförmigen Hohlkörper (1) umfassend, der durch Verkleben zweier halbkugelförmiger Schalen (2, 3) im Bereich zweier ergänzender Falze (5, 6), die an den freien Rändern der Schalen realisiert sind, gebildet wird, wobei die Falze jeweils eine radiale Tragweite (7, 8) und eine umfängliche Tragweite (9, 10) aufweisen, die umfänglich gegenüber für die radialen Tragweiten (7, 8) und radial gegenüber für die umfänglichen Tragweiten (9, 10) angeordnet sind, wobei der Tischtennisball **dadurch gekennzeichnet ist, dass** die umfänglichen Tragweiten (9, 10) jeweils einen zylindrischen Abschnitt (11, 12) und einen konischen Abschnitt (14, 15) aufweisen.

2. Tischtennisball nach Anspruch 1, **dadurch gekennzeichnet, dass** die zylindrischen Abschnitte (11, 12) jeweils eine Dicke (e₁, e₂) aufweisen, deren Summe größer als die nominale Dicke (e) der Schalen (2, 3) ist.

3. Tischtennisball nach Anspruch 2, **dadurch gekennzeichnet, dass** der freie Rand des inneren Falzes (6) einen Basisabschnitt (18) aufweist, aus dem sich die umfängliche Tragweite (10) erstreckt, wobei der Basisabschnitt eine Dicke aufweist, die von der Summe der Dicken (e₁, e₂) eines jeden der zylindrischen Abschnitte (11, 12) bis zu der nominalen Dicke (e) der Schalen (2, 3) abnehmend ist.

4. Tischtennisball nach Anspruch 3, **dadurch gekennzeichnet, dass** der Basisabschnitt (18) eine innere Abflachung (19) aufweist.

5. Tischtennisball nach einem der Ansprüche 1 bis 4, **dadurch gekennzeichnet, dass** die konischen Abschnitte (14, 15) zwischen sich ein Spiel (16) bilden, dessen Abmessung D größer als die Durchmesserdifferenz der zylindrischen Abschnitte (11, 12) ist.

6. Tischtennisball nach einem der Ansprüche 1 bis 5, **dadurch gekennzeichnet, dass** ein Kleber an der Schnittstelle der Tragweiten (7-10) der Falze (5, 6) aufgebracht wird.

7. Tischtennisball nach einem der Ansprüche 1 bis 6, **dadurch gekennzeichnet, dass** jeder Falz (5, 6) nacheinander, von außen nach innen, die radiale Tragweite (7, 8), den zylindrischen Abschnitt (11, 12), dann den konischen Abschnitt (14, 15) aufweist.

8. Tischtennisball nach einem der Ansprüche 1 bis 7, **dadurch gekennzeichnet, dass** sich die radiale Tragweite (7, 8), der zylindrische Abschnitt (11, 12) und der konische Abschnitt (14, 15) mindestens eines Falzes (5, 6) durchgehend erstrecken.

9. Tischtennisball nach einem der Ansprüche 5 bis 8, **dadurch gekennzeichnet, dass** mindestens eine umfängliche Tragweite (9, 10) einen radialen Ansatz (17) aufweist, der den konischen Abschnitt (14, 15) mit dem zylindrischen Abschnitt (11, 12) verbindet, wobei der Ansatz angeordnet ist, um die Abmessung D des Spiels (16) zwischen den konischen Abschnitten (14, 15) zu definieren.

10. Tischtennisball nach einem der Ansprüche 1 bis 9, **dadurch gekennzeichnet, dass** die konischen Abschnitte (14, 15) einen selben Konizitätswinkel aufweisen.

11. Tischtennisball nach einem der Ansprüche 1 bis 10, **dadurch gekennzeichnet, dass** der konische Abschnitt (14, 15) eine Länge aufweist, die größer ist, als jene des zylindrischen Abschnitts (11, 12), insbesondere dadurch, dass sie zwischen 150 % und 300 % der Länge des zylindrischen Abschnitts enthalten ist.

12. Tischtennisball nach einem der Ansprüche 1 bis 11, **dadurch gekennzeichnet, dass** die Länge der radialen Tragweite (7, 8) zwischen 15 % und 45 % der nominalen Dicke (e) der Schale (2, 3) enthalten ist.

13. Tischtennisball nach einem der Ansprüche 1 bis 12, **dadurch gekennzeichnet, dass** die zylindrischen Abschnitte (11, 12) im Wesentlichen einen selben Durchmesser aufweisen, um spielfrei radial gegenüber angeordnet zu werden.

14. Tischtennisball nach einem der Ansprüche 1 bis 13, **dadurch gekennzeichnet, dass** die radialen Tragweiten (7, 8) in umfänglicher Anlage aufeinander sind.

15. Tischtennisball nach einem der Ansprüche 1 bis 14, **dadurch gekennzeichnet, dass** die Schalen (2, 3) auf Basis eines thermoplastischen Materials realisiert werden, das kein Zelluloid umfasst.

16. Tischtennisball nach Anspruch 15, **dadurch gekennzeichnet, dass** das thermoplastische Material mindestens ein Elastomer umfasst, insbesondere dadurch, dass es aus ABS und ASA ausgewählt wird.

17. Tischtennisball nach einem der Ansprüche 15 oder 16, **dadurch gekennzeichnet, dass** das thermoplastische Material Polycarbonat umfasst.

18. Tischtennisball nach den Ansprüchen 16 und 17, **dadurch gekennzeichnet, dass** das thermoplastische Material ein Gemisch aus ABS und/oder ASA mit einer Menge an Polycarbonat umfasst, die zwischen 40 Gew.-% und 50 Gew.-% enthalten ist.

19. Verfahren zur Herstellung eines Tischtennisballes nach einem der Ansprüche 1 bis 18, **dadurch gekennzeichnet, dass** es vorsieht:
- Bilden zweier halbkugelförmiger Schalen (2, 3), die jeweils einen freien Rand aufweisen, auf dem ein Falz (5, 6) realisiert ist, wobei jeder der Falze eine radiale Tragweite (7, 8) und eine umfängliche Tragweite (9, 10) aufweist, die einen zylindrischen Abschnitt (11, 12) und einen konischen Abschnitt (14, 15) aufweisen;
- Aufbringen eines Klebers auf mindestens einen Falz (5, 6) ;
- Zusammensetzen der Schalen (2, 3) im Bereich ihrer Falze (5, 6) durch Anordnen der radialen Tragweiten (7, 8) umfänglich gegenüber und der umfänglichen Tragweiten (9, 10) radial gegenüber.

20. Verfahren zur Herstellung nach Anspruch 19, **dadurch gekennzeichnet, dass** die Schalen (2, 3) durch Formen durch Einspritzen eines thermoplastischen Materials gebildet werden.

21. Verfahren zur Herstellung nach einem der Ansprüche 19 oder 20, **dadurch gekennzeichnet, dass** der Kleber an dem Umlauf der Tragweiten (7-10) mindestens eines der Falze (5, 6) aufgebracht wird, wobei mindestens eine Schale (2, 3) bei dem Auftragen des Klebers und/oder bei dem Zusammensetzen der Schalen drehbewegt wird, um die Verteilung des Klebers zwischen den Falzen zu fördern.

22. Verfahren zur Herstellung nach einem der Ansprüche 19 bis 21, **dadurch gekennzeichnet, dass** es weiter einen Schritt zum Entfernen eines eventuellen Kleberüberschusses vorsieht, der auf der äußeren Oberfläche (13) des kugelförmigen Körpers (1) aufgetragen ist.

## Claims

1. Table tennis ball comprising a hollow spherical body (1) formed by gluing together two hemispherical shells (2, 3) at two complementary rabbets (5, 6) formed on the free edges of said shells, said rabbets each having a radial surface (7, 8) and a circumferential surface (9, 10) which are disposed so as to face one another circumferentially in the case of the radial surfaces (7, 8) and so as to face one another radially in the case of the circumferential surfaces (9, 10), said table tennis ball being **characterized in that** the circumferential surfaces (9, 10) each have a cylindrical portion (11, 12) and a tapered portion (14, 15).

2. Table tennis ball according to claim 1, **characterized in that** the cylindrical portions (11, 12) each have a thickness (e₁, e₂) the sum of which is greater than the nominal thickness (e) of the shells (2, 3).

3. Table tennis ball according to claim 2, **characterized in that** the free edge of the inner rabbet (6) has a base portion (18) from which the circumferential surface (10) extends, said base portion having a thickness which decreases from the sum of the thicknesses (e₁, e₂) of each of the cylindrical portions (11, 12) to the nominal thickness (e) of the shells (2, 3).

4. Table tennis ball according to Claim 3, **characterized in that** the base portion (18) has an inner flat portion (19) .

5. Table tennis ball according to any one of claims 1 to 4, **characterized in that** the tapered portions (14, 15) form therebetween a clearance (16), whose size D is greater than the difference in diameter of the cylindrical portions (11, 12).

6. Table tennis ball according to any one of claims 1 to 5, **characterized in that** an adhesive is placed at the interface of the surfaces (7-10) of the rabbets (5, 6).

7. Table tennis ball according to any one of claims 1 to 6, **characterized in that** each rabbet (5, 6) comprises, successively from the outside inward, the radial surface (7, 8), the cylindrical portion (11, 12) and the tapered portion (14, 15).

8. Table tennis ball according to any one of claims 1 to 7, **characterized in that** the radial surface (7, 8), the cylindrical portion (11, 12) and the tapered portion (14, 15) of at least one rabbet (5, 6) extend continuously.

9. Table tennis ball according to any one of claims 5 to 8, **characterized in that** at least one circumferential surface (9, 10) has a radial shoulder (17) connecting the tapered portion (14, 15) to the cylindrical portion (11, 12), said shoulder being arranged to define the size D of the clearance (16) between the tapered portions (14, 15).

10. Table tennis ball according to any one of claims 1 to 9, **characterized in that** the tapered portions (14, 15) have a same angle of taper.

11. Table tennis ball according to any one of claims 1 to 10, **characterized in that** the tapered portion (14, 15) has a length which is greater than that of the cylindrical portion (11, 12), particularly being between 150% and 300% of the length of said cylindrical portion.

12. Table tennis ball according to any one of claims 1 to 11, **characterized in that** the length of the radial surface (7, 8) is between 15% and 45% of the nominal thickness (e) of the shell (2, 3).

13. Table tennis ball according to any one of claims 1 to 12, **characterized in that** the cylindrical portions (11, 12) substantially have a same diameter to be radially arranged without clearance.

14. Table tennis ball according to any one of claims 1 to 13, **characterized in that** the radial surfaces (7, 8) are set circumferentially against each another.

15. Table tennis ball according to any one of claims 1 to 14, **characterized in that** the shells (2, 3) are made of a thermoplastic material containing no celluloid.

16. Table tennis ball according to Claim 15, **characterized in that** the thermoplastic material comprises at least one elastomer, in particular being chosen from ABS and ASA.

17. Table tennis ball according to one of Claims 15 or 16, **characterized in that** the thermoplastic material comprises polycarbonate.

18. Table tennis ball according to claims 16 and 17, **characterized in that** the thermoplastic material comprises a mixture of ABS and/or ASA with an amount of between 40% and 50% polycarbonate by weight.

19. Method for producing a table tennis ball according to any one of claims 1 to 18, **characterized in that** same envisages:
- the formation of two hemispherical shells (2, 3) each having a free edge on which a rabbet (5, 6) is formed, each of said rabbets having a radial surface (7, 8) and a circumferential surface (9, 10) having a cylindrical portion (11, 12) and a tapered portion (14, 15);
- the provision of an adhesive on at least one rabbet (5, 6) ;
- the assembly of the shells (2, 3) at the rabbets (5, 6) thereof by arranging the radial surfaces (7, 8) circumferentially and the circumferential surfaces (9, 10) radially.

20. Manufacturing method according to claim 19, **characterized in that** the shells (2, 3) are formed by injection moulding of a thermoplastic material.

21. Manufacturing process according to one of Claims 19 or 20, **characterized in that** the adhesive is placed on the tower of surfaces (7-10) of at least one of the rabbets (5, 6), at least one shell (2, 3) being moved in rotation when the adhesive is applied and/or during assembly of said shells in order to promote the distribution of the adhesive between said rabbets.

22. Manufacturing process according to any one of claims 19 to 21, **characterized in that** same further provides for a step of removing possible excess adhesive placed on the outer surface (13) of the spherical body (1).
